# EUROPÄISCHE PATENTSCHRIFT

(11) **EP 0 950 976 B1**
(45) Veröffentlichungstag und Bekanntmachung des Hinweises auf die Patenterteilung: **31.10.2007**
(21) Anmeldenummer: 99107609.2
(22) Anmeldetag: 16.04.1999
(51) Int. Cl.: G06K 7/14

(54) **Optoelektronische Vorrichtung**
Opto-electronic device
Dispositif optoélectronique

(30) Priorität: 18.04.1998 DE 19817270
(43) Veröffentlichungstag der Anmeldung: 20.10.1999
(73) Patentinhaber: Leuze electronic GmbH + Co. KG, 73277 Owen/Teck (DE)
(72) Erfinder: Gseller, Rolf, 73230 Kirchheim/Teck (DE); Schmid, Rene, 8618 Oetwil am See (CH)
(74) Vertreter: Ruckh, Rainer Gerhard

(56) Entgegenhaltungen:
- DE-A- 2 336 246
- DE-A- 4 017 110
- US-A- 3 253 126
- US-A- 3 576 430
- US-A- 3 643 065
- US-A- 3 711 683
- US-A- 3 775 594
- PATENT ABSTRACTS OF JAPAN Bd. 0082, Nr. 52 (P-314), 17. November 1984 (1984-11-17) & JP 59 121582 A (MATSUSHITA DENKO KK), 13. Juli 1984 (1984-07-13)

## Beschreibung

Die Erfindung betrifft eine optoelektronische Vorrichtung gemäß dem Oberbegriff des Anspruchs 1.

Eine derartige Vorrichtung ist durch das Codier-System CLS der Firma Leuze electronic bekannt. Dieses System weist eine Codierleiste auf, welche mehrere hintereinander angeordnete Arretierungspunkte in Form von Bohrungen aufweist. An den Arretierungspunkten kann ein von einem Glasprisma gebildeter Reflektor angebracht werden. Die Position des Reflektors wird durch Reflexionslichttaster erfaßt, die der Codierleiste in Abstand gegenüberstehen. Prinzipiell können auch mehrere Reflektoren an der Codierleiste angebracht sein.

Jeder der Arretierungspunkte kodiert eine Ziffer von 0 bis 9. Durch eine den Reflexionslichtschranken nachgeschaltete Auswerteeinheit wird erkannt, welche Ziffern mittels der Reflektoren ausgewählt wurden. Diese Ziffern ergeben eine bestimmte Zahl, anhand derer ein Gegenstand, an welchem die Codierleiste angebracht ist, identifiziert werden kann. Vorzugsweise werden auf diese Weise Fördergüter und dergleichen identifiziert.

Nachteilig hierbei ist, daß für eine eindeutige Positionserkennung des Reflektors jedem Arretierungspunkt eine Reflexionslichtschranke gegenüberstehen muß. Dies bedeutet einen beträchtlichen baulichen Aufwand und ist entsprechend kostenintensiv.

Prinzipiell könnte zwar eine Reflexionslichtschranke entlang der gesamten Codierleiste geführt werden, um die einzelnen Reflektoren zu erfassen. Damit in diesem Fall eine sichere Zuordnung der dabei registrierten Empfangssignale zu den jeweiligen Ziffern möglich ist, muß die Reflexionslichtschranke mit definierter Geschwindigkeit entlang der Leiste geführt werden. Diese Geschwindigkeit muß fortlaufend kontrolliert werden. Zudem ist ein Erfassungssystem für den Absolutort der Reflexionslichtschranke erforderlich. Auch dies bedeutet einen großen konstruktiven Aufwand, der mit erheblichen Kosten verbunden ist.

Der nächste Stand der Technik, die DE 23 36 24 A betrifft einen einstellbaren Codierreflektor für lichtelektronisch zielgesteuerte Förder-, Sortier- oder Lageranlagen. Der Codierreflektor umfasst eine Grundplatte mit wenigstens einer parallel zur Bewegungsrichtung der Güter beziehungsweise der sie aufnehmenden Behälter verlaufenden Reflektorpositionsreihe mit Reflektorpositionen. Jede einzelne Reflektorposition ist unabhängig von allen anderen Reflektorpositionen der Reflektorpositionsreihe oder -reihen durch Schieber, Klappen oder Stöpsel wahlweise reflektierend oder nichtreflektierend einstellbar.

Aus der US-A-3,253,126 ist eine Codierplatte bekannt, die eine rechteckige Form aufweist und in welche ein Muster mit Löchern eingearbeitet ist. Hinter Die Löcher können wahlweise frei bleiben oder mit reflektierenden Hintergrundflächen bedeckt werden. Die Löcher werden mit einem Lichtschrankenarray abgetastet. Nur wenn die von diesem emittierten Lichtstrahlen auf eine Hintergrundfläche treffen, werden diese zur jeweiligen Lichtschranke zurückreflektiert.

Die US-A-3,775,594 beschreibt eine Karte zur Identifikation von Personen, auf welche neben einer Photographie der jeweiligen Person auch Codes aufgebracht sein können.

Der Erfindung liegt daher die Aufgabe zugrunde, eine Vorrichtung der eingangs genannten Art zu schaffen, welche eine möglichst einfache und flexible Identifikation von Gegenständen ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß weist die Codierleiste eine oder mehrere Leisten mit jeweils mehreren alphanumerischen Zeichen kodierten Feldern auf, die zur Vorgabe einer Kennung mittels Barcodes markierbar sind. Die Registrierung der Kennung erfolgt durch eine als Barcodelesegerät ausgebildete optoelektronische Vorrichtung.

Die Barcodes enthalten Informationen über die Markierung der Felder, die vom Barcodelesegerät unmittelbar ausgelesen werden. Somit ist auch bei großen Codierleisten und mehreren Markierungen eine schnelle und zuverlässige Registrierung der Kennung gewährleistet.

Besonders vorteilhaft ist, daß zur Registrierung der Kennung lediglich ein Barcodelesegerät benötigt wird. Da die Barcodes individuelle Markierungen tragen, ist eine sichere Registrierung der Kennung auch dann gewährleistet, wenn die Codierleiste mit großer Geschwindigkeit relativ zum Barcodelesegerät bewegt wird. Dies beruht darauf, daß die einzelnen registrierten Barcodes anhand ihrer Kodierungen einander zugeordnet werden können. Eine Erfassung der Absolutorte der Barcodes ist für die Auswertung nicht nötig.

Weiter ist vorteilhaft, daß die Codierleiste auch große Längen und einen komplexen Aufbau aufweisen kann, ohne daß dadurch die Auswertung der Kennung erschwert würde.

Die Erfindung wird im nachstehenden anhand der Zeichnungen erläutert. Es zeigen:
- Figur 1:: Schematische Darstellung eines Barcodelesegeräts zur Abtastung von Codierleisten.
- Figur 2:: Ein erstes Ausführungsbeispiel einer Codierleiste.

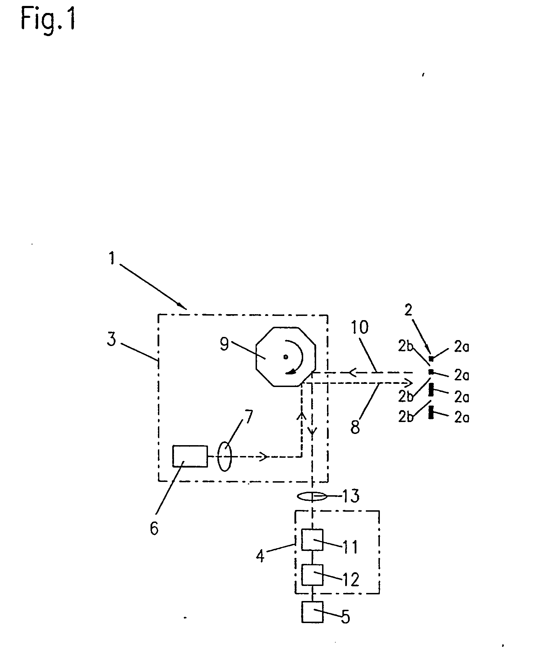

In Figur 1 ist der prinzipielle Aufbau einer als Barcodelesegerät ausgebildeten optoelektronischen Vorrichtung 1 dargestellt. Mit dem Barcodelesegerät werden Barcodes 2 erfaßt, welche im wesentlichen aus einer Folge von schwarzen und weißen Linienelementen 2a, 2b mit definierter Länge und Breite bestehen.

Das Barcodelesegerät besteht im wesentlichen aus einem Sendeelement 3, einem Empfangselement 4 sowie einer Auswerteeinheit 5. Das Sendeelement 3 besteht aus einem Sender 6, vorzugsweise einer Laserdiode, sowie aus einer dem Sender 6 vorgeschalteten Sendeoptik 7 zur Fokussierung der Sendelichtstrahlen 8. Die fokussierten Sendelichtstrahlen 8 werden über eine Ablenkeinheit 9, die im vorliegenden Ausführungsbeispiel von einem rotierenden Polygonspiegelrad gebildet ist, abgelenkt und über den zu detektierenden Barcode 2 geführt. Die Drehachse des Polygonspiegelrads ist senkrecht zur in Figur 1 dargestellten Äquatorialebene des Polygonspiegelrads angeordnet, welche die Abtastebene bildet.

Die vom Barcode 2 reflektierten Empfangslichtstrahlen 10 werden über das Polygonspiegelrad zum Empfangselement 4 geführt. Das Empfangselement 4 besteht aus einer Fotodiode 11, in der die Empfangslichtstrahlen 10 in ein elektrisches Empfangssignal gewandelt werden, und einem diesem nachgeschalteten Verstärker 12. Zur Verbesserung der Nachweisempfindlichkeit ist dem Empfangselement 4 eine Empfangsoptik vorgeschaltet.

Das am Ausgang des Empfangselements 4 anstehende Empfangssignal wird der Auswerteeinheit 5 zugeführt.

Mit dem Barcodelesegerät werden Codierleisten 14 abgetastet, die an nicht dargestellten Gegenständen zu deren Identifizierung angebracht sind. Die Gegenstände können insbesondere von Fördergut wie zum Beispiel Behältern, Kisten und dergleichen gebildet sein. Insbesondere kann dieses Fördergut auf Transportbändern transportiert werden. Das Barcodelesegerät ist in diesem Fall ortsfest in Abstand zum Transportband angeordnet und tastet die Codierleisten 14 an den vorbeibewegten Gegenständen ab.

Die Codierleisten 14 weisen wenigstens eine Leiste 15a, b, c mit mehreren Feldern auf, welche jeweils ein alphanumerisches Zeichen kodieren. Die Einstellung einer Kennung an der Codierleiste 14 erfolgt manuell dadurch, daß eines oder mehrere dieser Felder markiert werden. Erfindungsgemäß sind diese Felder mittels Barcodes 2 markiert, welche von Barcodelesegeräten abgetastet werden.

Besonders vorteilhaft weist die Codierleiste 14 mehrere Leisten 15a, b, c auf, wobei zur Vorgabe der Kennung jeweils ein Feld einer Leiste 15a, b, c mit einem Barcode 2 markiert ist. Die Kennung besteht in diesem Fall zweckmäßigerweise aus einer mehrstelligen Zahl, wobei jede Ziffer dieser Zahl jeweils durch den Barcode 2 einer Leiste 15a, b, c kodiert ist. Dementsprechend stimmt die Anzahl der Leisten 15a, b, c mit der maximalen Anzahl der Stellen der Zahl überein.

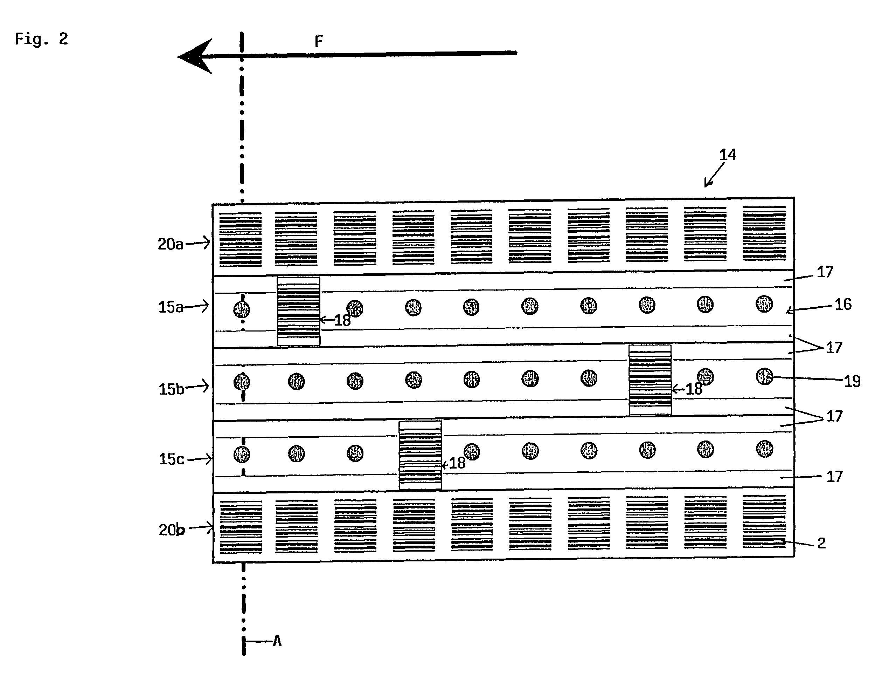

Ein derartiges Ausführungsbeispiel einer solchen Codierleiste 14 ist in Figur 2 dargestellt. Die Codierleiste 14 weist drei stabförmige Leisten 15a, b, c auf, welche in Richtung quer zu deren Längsachsen nebeneinander liegend angeordnet sind. Jede der Leisten 15a, b, c weist zehn Felder in Form von Steckplätzen 16 zur Kodierung der Ziffern 0 bis 9 auf. Die Markierung eines Feldes erfolgt dadurch, daß dieses Feld von einem Barcode 2 abgedeckt wird.

Die Leisten 15a, b, c sind jeweils identisch ausgebildet und bestehen im wesentlichen aus Aluminiumprofilen. Diese Profile weisen an den längsseitigen Rändern Stege 17 auf, die sich in Richtung der Mittelachse des Profils erstrecken. In der Leiste 15a, b, c ist ein Aufsatz 18 verschiebbar angeordnet, auf dessen Stirnfläche der Barcode 2 angebracht ist. Der Aufsatz 18 hintergreift die Stege 17 und ist so gegen ein Herauslösen aus dem Profil gesichert. Zudem weist der Aufsatz 18 an seinem Boden einen Steckkopf auf. Jedes Feld in der Leiste 15a, b, c weist eine Bohrung 19 auf, deren Durchmesser an den Durchmesser des Steckkopfes angepaßt ist. Sobald der Aufsatz 18 auf eines der Felder aufgeschoben wird, rastet der Steckkopf in die Bohrung 19 ein. Durch leichtes Anheben des Aufsatzes 18 wird der Steckkopf wieder aus der Bohrung 19 gelöst.

An den äußeren längsseitigen Rändern der ersten und dritten Leiste 15a, c schließt jeweils eine Kontroll-Leiste 20 an. Die Längsachsen der Kontroll-Leisten 20a, b verlaufen parallel zu den Längsachsen der Leisten 15a, b, c.

Die Kontroll-Leisten 20a, b sind identisch aufgebaut und entsprechen in ihrem Aufbau auch den Leisten 15a, b, c. Insbesondere ist die Felderanordnung bei sämtlichen Leisten 15a, b, c und Kontroll-Leisten 20a, b identisch.

Die Felder jeder Kontoll-Leiste 20a, b sind jeweils mit einem Barcode 2 bedeckt, wobei die Barcodes 2 in aufsteigender Reihenfolge die Ziffern 0 bis 9 kodieren.

An der Codierleiste 14 kann durch Verschieben der Aufsätze 18 in den Profilen der Leisten 15a, b, c eine Zahl im Bereich von 0 bis 999 eingestellt werden.

Mit dem Barcode 2 an der ersten Leiste 15a wird die Hunderterziffer dieser Zahl eingestellt. Entsprechend trägt dieser Barcode 2 die Kodierung "Hunderter". Der Barcode 2 an der zweiten Leiste 15b trägt die Kodierung "Zehner", der Barcode 2 an der Dritten Leiste 15c trägt die Kodierung "Einer". Dementsprechend sind mit diesen Barcodes 2 die Zehner- bzw. Einerziffern der Zahl einstellbar.

Zur Abtastung der Codierleiste 14 ist das Barcodelesegerät so ausgerichtet, daß die durch die Abtastbewegung der Sendelichtstrahlen 8 definierte Abtastrichtung A quer zu den Längsachsen der Leisten 15a, b, c und Kontroll-Leisten 20a, b verläuft. Somit wird bei einem korrekt ausgerichteten Barcodelesegerät während einer Abtastung zuerst ein Barcode 2 an der ersten Kontroll-Leiste 20a erfaßt, anschließend wird nacheinander jeweils ein Feld der drei Leisten 15a, b, c abgetastet, und schließlich wieder ein Barcode 2 der zweiten Kontroll-Leiste 20b abgetastet. Dabei werden bei der Abtastung der Kontroll-Leisten 20a, b jeweils Barcodes 2 erfaßt welche dieselbe Ziffer kodieren. In Figur 1 ist gestrichelt die Abtastrichtung A einer Abtastung eingezeichnet, bei welcher die Barcodes 2 mit der Ziffer 0 an den Kontroll-Leisten 20a, b abgetastet werden. Die Abtastung der restlichen Codierleiste 14 erfolgt dadurch, daß die Codierleiste 14 in Förderrichtung F an dem Barcodelesegerät vorbeibewegt wird. Ist die Codierleiste 14 um ein Feld weiterbewegt worden, werden bei einer Abtastung die Barcodes 2 mit den Ziffern 1 an den Kontroll-Leisten 20a, b erfaßt. Mit derselben Abtastung wird der Barcode 2 mit der Kodierung "Hunderter" erfaßt. Durch die Erfassung dieses Barcodes 2 zusammen mit den die Ziffer 1 kodierenden Barcode 2 an den Kontroll-Leisten 20a, b ist eine eindeutige Zuordnung gegeben, daß die Hunderterziffer der Kennung den Wert eins trägt. Im Lauf der weiteren Abtastung wird die Zehnerziffer dem Wert sieben zugeordnet und die Einerziffer der Zahl dem Wert 3 zugeordnet. Demzufolge ergibt sich in der Auswerteeinheit 5 des Barcodelesegeräts nach vollständiger Abtastung der Codierleiste 14 der Wert 173 für die Kennung. Da bei jeder Abtastung eine eindeutige Zuordnung der registrierten Barcodes 2 an den Leisten 15a, b, c zu den Ziffern an den Kontroll-Leisten 20a, b besteht, kann die Codierleiste 14 mit sehr hohen Geschwindigkeiten an dem Barcodelesegerät vorbeibewegt werden, ohne dass die Detektionssicherheit beeinträchtigt wird.

Ist das Barcodelesegerät nicht korrekt ausgerichtet, so dass die Abtastrichtung A schräg zu den Längsachsen der Leisten 15a, b, c verläuft, so werden bei jeder Abtastung unterschiedliche Ziffern an den Kontroll-Leisten 20a, b registriert. Dies führt zu einer Fehlermeldung im Barcodelesegerät.

## Patentansprüche

1. Optoelektronische Vorrichtung zur Abtastung von an Gegenständen angeordneten Codierleisten mit wenigstens einer Leiste mit mehreren alphanumerische Zeichen kodierenden Feldern, wobei zur Kennzeichnung der Gegenstände eine Kennung an der Codierleiste durch Markieren wenigstens eines der Felder einstellbar ist, wobei die optoelektronische Vorrichtung von einem Barcodelesegerät gebildet ist, welches zur Erfassung der Kennung die von Barcodes gebildeten markierten Felder abtastet, **dadurch gekennzeichnet, dass** das Barcodelesegerät ein Sendelichtstrahlen (8) emittierendes Sendeelement (3) und ein Empfangslichtstrahlen (10) empfangendes Empfangselement (4) aufweist, wobei die Sendelichtstrahlen (8) mittels einer Ablenkeinheit (9) abgelenkt werden, so dass die Sendelichtstrahlen (8) periodisch innerhalb einer Abtastebene geführt sind, dass die mit der Codierleiste (14) einstellbare Kennung von einer mehrstelligen Zahl gebildet ist, wobei jeweils eine Leiste (15a, b, c) zur Kodierung einer Ziffer der Zahl vorgesehen ist, dass die Codierleiste (14) Kontroll-Leisten (20a, b) mit Barcodes (2) aufweist, welche in aufsteigender Reihenfolge die Ziffern 0 bis 9 kodieren, und dass bei jeder Abtastung des Barcodelesegeräts eine eindeutige Zuordnung der registrierten Barcodes 2 zu den Ziffern an den Kontroll-Leisten (20a, b) besteht.

2. Optoelektronische Vorrichtung nach Anspruch 1, **dadurch gekennzeichnet, dass** die Codierleiste (14) drei stabförmige Leisten (15a, b, c) aufweist, welche in Richtung quer zu deren Längsachsen nebeneinanderliegend angeordnet sind, wobei jede Leiste (15a, b, c) zehn Felder zur Kodierung der Ziffern 0 bis 9 aufweist, daß jeweils ein Feld einer Leiste (15a, b, c) durch Abdecken mittels eines Barcodes (2) markiert ist, und daß die Felder der Leisten (15a, b, c) nacheinander vom Barcodelesegerät abgetastet werden, wobei die durch die Abtastbewegung der Sendelichtstrahlen (8) definierte Abtastrichtung A quer zu den Längsachsen der Leisten (15a, b, c) verläuft und die Codierleiste (14) relativ zum Barcodelesegerät in Richtung der Längsachsen der Leisten (15a, b, c) bewegbar ist, so dass die gesamte Codierleiste (14) von dem Barcodelesegerät abgetastet wird.

3. Optoelektronische Vorrichtung nach Anspruch 2, **dadurch gekennzeichnet, dass** die Leisten (15a, b, c) der Codierleiste (14) identisch ausgebildet sind.

4. Optoelektronische Vorrichtung nach einem der Ansprüche 2 oder 3, **dadurch gekennzeichnet, dass** der Barcode (2) an der ersten Leiste (15a) die Kodierung "Hunderter", der Barcode (2) an der zweiten Leiste (15b) die Kodierung "Zehner" und der Barcode (2) an der dritten Leiste (15c) die Kodierung "Einer" tragen.

5. Optoelektronische Vorrichtung nach einem der Ansprüche 2 bis 4, **dadurch gekennzeichnet, dass** die Barcodes (2) jeweils auf einem Aufsatz (18) mit einem Steckkopf angebracht sind, welcher jeweils an einer der Leisten (15a, b, c) verschiebbar angeordnet ist, und dass die Felder der Leisten (15a, b, c) jeweils eine Bohrung (19) aufweisen, in welche der Steckkopf einrastbar ist.

6. Optoelektronische Vorrichtung nach einem der Ansprüche 2 bis 5, **dadurch gekennzeichnet, dass** an den äußeren längsseitigen Rändern der ersten und dritten Leiste (15a, c) der Codierleiste (14) jeweils eine Kontroll-Leiste (20a, b) anliegt, deren Längsachsen parallel zu den Leisten (15a, b, c) verlaufen.

7. Optoelektronische Vorrichtung nach Anspruch 6, **dadurch gekennzeichnet, dass** die Kontroll-Leisten (20a, b) denselben Aufbau wie die Leisten (15a, b, c) aufweisen.

8. Optoelektronische Vorrichtung nach einem der Ansprüche 6 oder 7, **dadurch gekennzeichnet, dass** bei deren korrekter Ausrichtung relativ zur Codierleiste (14) bei jeder Abtastung gleiche Barcodes (2) auf der Kontroll-Leiste (20a, b) erfasst werden.

9. Optoelektronische Vorrichtung nach einem der Ansprüche 1 bis 8, **dadurch gekennzeichnet, dass** die Barcodes (2) aus Folgen von schwarzen und weißen Linienelementen (2a, b) bestehen und dass die durch die Barcodes (2) kodierten alphanumerischen Zeichen im Klartext in roter Farbe auf die Barcodes (2) aufgedruckt sind.

## Claims

1. Optoelectronic device for scanning coding strips, which are arranged on articles, with at least one strip with several fields coding alpha-numeric characters, wherein for characterisation of the articles an identification can be set at the coding strip by marking at least one of the fields, wherein the optoelectronic device is formed by a barcode reader which for detection of the identification scans the marked fields formed by barcodes, **characterised in that** the barcode reader comprises a transmitting element (3) emitting transmitted light beams (8) and a receiving element (4) receiving received light beams (10), wherein the transmitted light beams (8) are deflected by means of a deflecting unit (9) so that the transmitted light beams (8) are periodically guided within a scanning plane, that the identification settable by the coding strip (14) is formed by a multi-digit number, wherein a respective strip (15a, b, c) is provided for coding each numeral of the number, that the coding strip (14) comprises control strips (20a, b) with barcodes (2) which code the numerals 0 to 9 in rising sequence, and that in each scanning of the barcode reader a unique association of the registered barcodes (2) with the numerals of the control strips (20a, 20b) exists.

2. Optoelectronic device according to claim 1, **characterised in that** the coding strip (14) comprises three rod-like strips (15a, b, c) arranged adjacent to one another in a direction transverse to the longitudinal axes thereof, wherein each strip (15a, b, c) has ten fields for coding of the numerals 0 to 9, that each field of a strip (15a, b, c) is marked by covering by means of a barcode (2) and that the fields of the strips (15a, b, c) are scanned in succession by the barcode reader, wherein the scanning direction A defined by the scanning movement of the transmitted light beams (8) runs transversely to the longitudinal axes of the strips (15a, b, c) and the coding strip (14) is movable relative to the barcode reader in the direction of the longitudinal axes of the strips (15a, b, c) so that the entire coding strip (14) is scanned by the barcode reader.

3. Optoelectronic device according to claim 2, **characterised in that** the strips (15a, b, c) of the coding strip (14) are of identical construction.

4. Optoelectronic device according to one of claims 2 and 3, **characterised in that** the barcode (2) carries at the first strip (15a) the coding "hundreds", the barcode (2) carries at the second strip (15b) the coding "tens" and the barcode (2) carries at the third strip (15c) the coding "units".

5. Optoelectronic device according to one of claims 2 to 4, **characterised in that** the barcodes (2) are each applied to a respective attachment (18) with a plug head, which is displaceably arranged at one of the strips (15a, b, c), and that the fields of the strips (15a, b, c) each have a bore (19) in which the plug head is detentable.

6. Optoelectronic device according to one of claims 2 to 5, **characterised in that** respective control strips (20a, b) adjoin the outer longitudinal edges of the first and third strips (15a, c) of the coding strip (14), the longitudinal axes of the control strips extending parallel to the strips (15a, b, c).

7. Optoelectronic device according to claim 6, **characterised in that** the control strips (20a, b) have the same construction as the strips (15a, b, c).

8. Optoelectronic device according to one of claims 6 and 7, **characterised in that** in the case of correct orientation relative to the coding strip (14) the same barcodes (2) are detected on the control strip (20a, b) in each scanning.

9. Optoelectronic device according to one of claims 1 to 8, **characterised in that** the barcodes (2) consist of sequences of black and white line elements (2a, b) and that the alpha-numeric characters coded by the barcodes (2) are printed in plain text in red ink on the barcodes (2).

## Revendications

1. Dispositif optoélectronique pour balayer des bandes de codage disposées sur des objets comportant au moins une bande avec plusieurs champs codant des caractères alphanumériques, un identificateur étant réglable sur la bande de codage par marquage d'au moins un des champs en vue d'identifier les objets, le dispositif optoélectronique étant formé d'un lecteur de codes à barres, lequel balaye les champs marqués formés par des codes à barres en vue de saisir l'identificateur, **caractérisé en ce que** le lecteur de codes à barres présente un élément émetteur (3) émettant des rayons lumineux d'émission (8) et un élément récepteur (4) recevant des rayons lumineux de réception (10), les rayons lumineux d'émission (8) étant déviés au moyen d'une unité de déviation (9) de façon que les rayons lumineux d'émission (8) soient périodiquement guidés à l'intérieur d'un plan de balayage, que l'identificateur réglable avec la bande de codage (14) est formé d'un nombre à plusieurs chiffres, une bande (15a, b, c) étant chaque fois prévue pour coder un chiffre du nombre, que la bande de codage (14) présente des bandes de contrôle (20a, b) avec des codes à barres (2) qui codent dans l'ordre ascendant les chiffres 0 à 9, et qu'à chaque balayage du lecteur de codes à barres il existe une association non équivoque des codes à barres (2) enregistrés aux chiffres des bandes de contrôle (20a, b).

2. Dispositif optoélectronique selon la revendication 1, **caractérisé en ce que** la bande de codage (14) présente trois bandes (15a, b, c) en forme de barre qui sont disposées l'une à côté de l'autre en direction transversale à leurs axes longitudinaux, chaque bande (15a, b, c) présentant neuf champs pour coder les chiffres 0 à 9, que chaque fois un champ d'une bande (15a, b, c) est marqué par recouvrement au moyen d'un code à barres (2), et que les champs des bandes (15a, b, c) sont balayés l'un après l'autre par le lecteur de codes à barres, la direction de balayage A définie par le mouvement de balayage des rayons lumineux d'émission (8) s'étendant transversalement aux axes longitudinaux des bandes (15a, b, c) et la bande de codage (14) étant déplaçable par rapport au lecteur de codes à barres en direction des axes longitudinaux des bandes (15a, b, c) de façon que toute la bande de codage (14) soit balayée par le lecteur de codes à barres.

3. Dispositif optoélectronique selon la revendication 2, **caractérisé en ce que** les bandes (15a, b, c) de la bande de codage (14) ont une structure identique.

4. Dispositif optoélectronique selon l'une des revendications 2 ou 3, **caractérisé en ce que** le code à barres (2) porte sur la première bande (15a) le codage « centaine », sur la deuxième bande (15b) le codage « dizaine » et sur la troisième bande (15c) le codage « unité ».

5. Dispositif optoélectronique selon l'une des revendications 2 à 4, **caractérisé en ce que** les codes à barres (2) sont appliqués chaque fois sur un élément rapporté (18) pourvu d'une tête enfichable, lequel est disposé avec possibilité de translation chaque fois sur une bande (15a, b, c), et que les champs des bandes (15a, b, c) présentent chaque fois un trou (19) dans lequel la tête enfichable peut être enclenchée.

6. Dispositif optoélectronique selon l'une des revendications 2 à 5, **caractérisé en ce que** des bandes de contrôle (20a, b) dont les axes longitudinaux s'étendent parallèlement aux bandes (15a, b, c) sont adjacentes aux bords longitudinaux extérieurs de la première et de la troisième bande (15a, c) de la bande de codage (14).

7. Dispositif optoélectronique selon la revendication 6, **caractérisé en ce que** les bandes de contrôle (20a, b) présentent la même structure que les bandes (15a, b, c).

8. Dispositif optoélectronique selon l'une des revendications 6 ou 7, **caractérisé en ce qu'**en cas d'alignement correct par rapport à la bande de codage (14), les mêmes codes à barres (2) sont saisis à chaque balayage sur la bande de contrôle (20a, b).

9. Dispositif optoélectronique selon l'une des revendications 1 à 8, **caractérisé en ce que** les codes à barres (2) sont composés de suites d'éléments linéaires noirs et blancs (2a, b) et que les caractères alphanumériques codés par les codes à barres (2) sont imprimés en clair et en couleur rouge sur les codes à barres (2).
